# EUROPÄISCHE PATENTSCHRIFT

(11) **EP 3 121 373 B1**
(45) Veröffentlichungstag und Bekanntmachung des Hinweises auf die Patenterteilung: **20.01.2021**
(21) Anmeldenummer: 16176169.7
(22) Anmeldetag: 24.06.2016
(51) Int. Cl.: F01D 5/08, F01D 5/18

(54) **GEKÜHLTES TURBINENLAUFRAD, INSBESONDERE FÜR EIN FLUGTRIEBWERK**
COOLED TURBINE WHEEL, IN PARTICULAR FOR AN AIRCRAFT ENGINE
ROUE DE TURBINE REFROIDIE, PLUS PARTICULIÈREMENT POUR UN RÉACTEUR

(30) Priorität: 20.07.2015 DE 102015111746
(43) Veröffentlichungstag der Anmeldung: 25.01.2017
(73) Patentinhaber: Rolls-Royce Deutschland Ltd & Co KG, 15827 Blankenfelde-Mahlow (DE)
(72) Erfinder: Negulescu, Joana, 15827 Blankenfelde-Mahlow (DE); Täge, Jens, 15827 Blankenfelde-Mahlow (DE); Negulescu, Dimitrie, Dr., 15827 Blankenfelde-Mahlow (DE)
(74) Vertreter: Kronthaler, Wolfgang N.K.

(56) Entgegenhaltungen:
- EP-A2- 1 004 748
- EP-A2- 1 967 692
- DE-A1- 2 221 895
- DE-B- 1 221 497
- US-A- 4 178 129

## Beschreibung

Die Erfindung betrifft ein gekühltes Turbinenlaufrad, insbesondere ein Hochdruckturbinenlaufrad für ein Flugtriebwerk, bei dem gemäß den Merkmalen des Oberbegriffs des Patentanspruchs 1 eine Kühleinrichtung vorgesehen ist, welche zumindest einen sich wenigstens im Wesentlichen axial und wenigstens über einen Teil der axialen Länge eines Schaufelfußes einer Turbinenschaufel erstreckenden Kühlluftzuführkanal und mindestens einen hiervon radial abzweigenden, sich im Inneren der Turbinenschaufel bis zu einer Austrittsöffnung an deren Oberfläche erstreckenden Kühlkanal umfasst.

Derartig ausgebildete Turbinenlaufräder sind mit unterschiedlichsten Ausgestaltungen von Kühlluftzuführkanälen bekannt, wobei beispielsweise auf die US 4,178,129 A, DE 21 21 497 B, DE 22 21 895, EP1967692 A2, DE 103 32 561 A1, die EP 1 004 748 und die EP 1 464 792 B1 verwiesen wird.

All diesen Lösungen ist das Bestreben gemeinsam, die Turbinenschaufeln mit einer dem Turbinenlaufrad zugeführten Hochdruckkühlluft möglichst effektiv zu kühlen, um die Wärmebelastung der Turbinenschaufeln zu minimieren und eine möglichst hohe Lebensdauer zu gewährleisten. Bevorzugt wird dabei, wie z. B. in der DE 103 32 561 A1 ersichtlich, der Bereich der Turbinenschaufelaufnahme am Scheibenkranz der Rotorscheibe eines Turbinenlaufrads so gestaltet, dass zwischen einem Schaufelfuß einer Turbinenschaufel und einer Fingerscheibennut zwischen Scheibenfingern der Rotorscheibe, welche die Turbinenschaufel halten, ein schlitzartiger Kühlluftzuführkanal verbleibt, durch den ein Kühlluftstrom in Axialrichtung der Turbinenschaufel geführt wird und von dem radial Kühlkanäle in ein Schaufelprofil der Turbinenschaufel abzweigen.

Das für eine effiziente Kühlung der Turbinenschaufeln in der jeweiligen Schaufel zur Verfügung stehende Druckgefälle wird jedoch insbesondere bei einem mit Drall in den Kühlluftzuführkanal eintretenden Kühlluftstrom aufgrund der großen Druckverluste am Eintritt in den Kühlluftzuführkanal erheblich reduziert, womit auch die Kühlung in den Turbinenschaufeln und im Scheibenkranz beeinträchtigt wird. Eine demzufolge reduzierte Kühlung führt zum Sinken der Lebensdauer der Turbinenschaufel wie des gesamten Turbinenlaufrades im Triebwerk.

Der Erfindung liegt die Aufgabe zugrunde, ein gekühltes Turbinenlaufrad, insbesondere für ein Flugtriebwerk, der eingangs näher bezeichneten Art derart auszubilden, dass mit geringem Aufwand eine effektive Kühlung der Turbinenschaufeln und des Scheibenkranzes und damit eine lange Lebensdauer des Turbinenlaufrades auch bei einer Drall aufweisenden Kühlluftanströmung gewährleistet ist.

Erfindungsgemäß wird die Aufgabe mit einem gemäß den Merkmalen des Patentanspruchs 1 ausgebildeten Turbinenlaufrad gelöst.

Es ist mithin ein gekühltes Turbinenlaufrad, insbesondere ein Hochdruckturbinenlaufrad für ein Flugtriebwerk, mit an einer Umfangsfläche einer Rotorscheibe radial angeordneten Turbinenschaufeln vorgesehen, wobei jeweils eine Turbinenschaufel mit einem profilierten Schaufelfuß in eine korrespondierend profilierte Scheibenfingernut an der Umfangsfläche der Rotorscheibe eingesetzt ist, und wobei eine Kühleinrichtung vorgesehen ist mit mindestens einem sich zumindest im Wesentlichen axial und wenigstens über einen Teil der axialen Länge des Schaufelfußes erstreckenden Kühlluftzuführkanal und mindestens einem hiervon abzweigenden, sich im Inneren der Turbinenschaufel bis zu einer Austrittsöffnung an deren Oberfläche erstreckenden Kühlkanal. Hierbei ist erfindungsgemäß an der Anströmseite des Schaufelfußes in dem Kühlluftzuführkanal ein Pfropfen bzw. Plug mit einem Kühlluftdurchlass angeordnet, wobei der Kühlluftdurchlass eine einen Mikrokompressor bildende Geometrie aufweist.

Das Vorsehen eines Mikrokompressors eingangsseitig des Kühlluftzuführkanals bewirkt vorteilhafterweise eine effiziente Turbinenschaufelkühlung ohne zusätzliche Druckverluste, wobei auch ein mit einem relativen Drall entgegen der Drehrichtung der Rotorscheibe in den Kühlluftkanal eintretender Kühlluftstrom trotz drallbedingter Druckverluste für eine zufriedenstellende Kühlung der Turbinenschaufeln ausreichend ist. Der mit der Erfindung erzielbare Kühlstromstaudruckgewinn in dem Kühlluftzuführkanal ermöglicht eine effiziente Innenkühlung der jeweiligen Turbinenschaufel, wobei auch in Bereichen mit großem Gegendruck, die mit herkömmlichen Kühlsystemen nur sehr schwer zu kühlen sind, Kühlluft ausgeblasen werden kann. Die Lebensdauer der Turbinenschaufeln und der Rotationsscheibe des Turbinenlaufrades können damit deutlich erhöht werden.

Erfindungsgemäß weist der Kühlluftdurchlass eine sich in Strömungsrichtung diffusorartig erweiternde Kanalgeometrie auf. Hiermit wird auf konstruktiv einfache Weise ein Mikrokompressor geschaffen.

Die geometrische Gestaltung des Mikrokompressors erfolgt zweckmäßigerweise so, dass die aerodynamische Eintrittsfläche im Auslegungspunkt auf die Relativgeschwindigkeit der Anströmung optimiert ist, und damit eine weitestgehend verlustfreie Einströmung in den Mikrokompressor erfolgen kann. Die im Mikrokompressor stattfindende Verlangsamung der Strömungsgeschwindigkeit sorgt für einen stetigen Anstieg des statischen Druckes, der letztlich zu einem verbesserten Kühlsystem führt.

Bei einem beispielhaften 1:2-Verhältnis des Strömungsquerschnitts zwischen Eintritt in den Kühlluftzuführkanal und hiermit in den einen Mikrokompressor darstellenden Pfropfen und dem Austritt aus dem Mikrokompressor an dessen Übergang zu dem weiteren Verlauf des im Wesentlichen axialen Kühlluftzuführkanals kann ein stetiger Anstieg der Drallzahl von z. B. 0.5 auf etwa 1 erzielt werden, was einen größtmöglichen Kühlstromstaudruckgewinn ermöglicht.

Vor allem in Hinblick auf eine mit Drall anströmende Kühlluft kann es somit vorteilhaft sein, wenn der Kühlluftdurchlass des Pfropfens und mithin der Mikrokompressor in Strömungsrichtung horizontal eine Krümmung aufweist, wobei eine Mittelachse des Kühlluftdurchlasses im Bereich des Eintritts eines Drall aufweisenden Kühlluftstromes wenigstens annähernd gleichgerichtet zu der Kühlluftanströmrichtung, welche in Umfangsrichtung der Rotorscheibe im Wesentlichen in Rotationsrichtung der Rotationsscheibe ist, verläuft und nach der Krümmung im Bereich des Austritts des Kühlluftstromes aus dem diffursorartigen Kühlluftdurchlass des Pfropfens bzw. "Plug" im Wesentlichen in Axialerstreckung des Kühlluftzuführkanals ausgerichtet ist.

Mit der Krümmung kann der Eintritt des Kühlluftstroms flach mit der Anströmseite der Turbinenschaufel und der Rotorscheibe ausgestaltet sein, so dass der Kühlluftstrom auch bei einem Drall mit möglichst wenig Druckverlust in den Mikrokompressor eintritt. Es hat sich gezeigt, dass damit in dem Kühlluftzuführkanal ein Kühlstromstaudruckgewinn von mehr als 10 % im Vergleich zu bekannten Kühlsystemen erzielt werden kann.

Bei einer vorteilhaften Ausführung der Erfindung, insbesondere bei einer gekrümmten Diffusorgeometrie, kann eine Querschnittsfläche A_f der Öffnung des Kühlluftdurchlasses an der Anströmseite des Schaufelfußes wenigstens annähernd dem Zweifachen einer Querschnittsfläche A_t eines Halsquerschnittes des Kühlluftdurchlasses im Bereich des Eintritts eines Kühlluftstromes entsprechen. Die jeweiligen Größenverhältnisse können jedoch je nach Anwendungsfall variieren.

Wenn der Pfropfen mit dem Kühlluftdurchlass als ein sich radial in Richtung des Inneren des Turbinenlaufrads und in den Kühlluftzuführkanal erstreckender, axial vor der Abzweigung eines Kühlkanals der Turbinenschaufel angeordneter Fortsatz des Schaufelfußes ausgebildet ist, ist der Mikrokompressor mit seiner Positionierung in der tiefsten Radialposition der Turbinenschaufel am effektivsten.

Die Erfindung ist jedoch nicht auf eine derartige Positionierung des Kühlluftzuführkanals und des Mikrokompressors beschränkt. Der Fachmann wird je nach Anwendungsfall die Vorteile der Erfindung auch bei einer höheren Radialposition des Kühlluftzuführkanals und des Mikrokompressors in der Turbinenschaufel nutzen, beispielsweise wenn der Kühlluftzuführkanal in die Turbinenschaufel integriert ist und die Kühlluftströmungsführung nur innerhalb der Turbinenschaufel realisiert ist. Es ist dabei eine Anordnung des Kühlluftzuführkanals mit dem Mikrokompressor im gesamten radialen Erstreckungsbereich des Schaufelfußes bis hin zu einem Schaufelhals, d. h. einem Übergangsbereich von dem Schaufelfuß zu einem sich radial nach außen anschließenden Plattformteil der Turbinenschaufel, möglich.

Bei einer vorteilhaften Weiterbildung eines Turbinenlaufrades gemäß der Erfindung kann der Schaufelfuß ein tannenbaumartig geformtes Profil aufweisen, an dessen dem radial Inneren des Turbinenlaufrads zugewandter Unterseite der Fortsatz zahnartig und einstückig ausgebildet ist.

Ein solches einstückiges Bauteil kann auf konstruktiv einfache Weise als Gussteil bereitgestellt werden, wobei der diffusorartige Kühlluftdurchlass je nach Geometrie und hierfür günstigstem Herstellungsverfahren mitgegossen oder mittels spanender Bearbeitung eingebracht sein kann.

Weiterhin ist es auch denkbar, dass der Pfropfen bzw. Mikrokompressor an den Schaufelfuß angeschweißt, angelötet oder anderweitig angebunden wird oder dass dieser ein separates Bauteil bildet, welches eingangsseitig des Kühlluftzuführkanals mit einer geeigneten Axialsicherung in den Kühlluftzuführkanals unterhalb des Schaufelfußes, d. h. radial dem Inneren des Turbinenlaufrades und einem Boden der Scheibenfingernut zugewandt, eingesetzt wird.

Bei einer baulich einfachen Ausführung der Erfindung kann der Kühlluftdurchlass in einem einem Boden der Scheibenfingernut zugewandten Bereich mit einem offenen Querschnitt ausgebildet sein und zusammen mit der Scheibenfingernut den Strömungsquerschnitt für den Kühlluftstrom bilden.

In diesem Fall wird die Scheibenfingernut zur Bildung des Kühlluftzuführkanals genutzt, so dass drei von vier Seitenflächen des räumlichen Diffusorgebildes des Kühlluftdurchlasses durch den Pfropfen bzw. die Turbinenschaufel gebildet werden und eine Seitenfläche durch die Rotorscheibe, während für den anschließenden axialen Abschnitt des Kühlluftzuführkanals drei Seitenwände durch die Scheibenfinger und die Scheibenfingernut der Rotorscheibe gebildet werden können und eine vierte, radial äußere Wandung durch die Unterseite des Schaufelfußes.

Um Verwirbelungen und einen Druckverlust bei Eintritt des Kühlluftstromes in den Kühlluftzuführkanal und den Mikrokompressor an der Anströmseite des Schaufelfußes und der Rotorscheibe zu vermeiden, ist es vorteilhaft, wenn der Eintritt des Kühlluftstromes über keine scharfe Werkstückkante erfolgt, sondern über eine gerundete oder mit einer Fase versehene Kante. Wenn die Scheibenfingernut zur Ausbildung des Kühlluftzuführkanals genutzt wird, kann deren Kante an ihrem der Anströmseite zugewandten Ende beispielsweise vollständig oder nur über die Breite des Kühlluftdurchlasses mit einem Radius oder einer Fase ausgebildet sein.

Weitere Vorteile und Ausführungsmöglichkeiten eines erfindungsgemäß gekühlten Turbinenlaufrads ergeben sich ebenfalls aus den Patentansprüchen und dem nachfolgend unter Bezugnahme auf die Zeichnung prinzipmäßig beschriebenen Ausführungsbeispiel.

Es zeigt:
- Fig. 1: eine vereinfachte perspektivische Darstellung eines rückwärtigen Bereichs eines erfindungsgemäß ausgebildeten gekühlten Turbinenlaufrads eines Flugtriebwerks ohne Schließplatte,
- Fig. 2: eine Vorderansicht eines Scheibenkranzbereichs des Turbinenlaufrads der Fig. 1, wobei ausschnittsweise mit einer Kühleinrichtung versehene, zwischen Scheibenfingern einer Rotorscheibe gehaltene Turbinenschaufeln ersichtlich sind,
- Fig. 3: einen schematisierten Teil-Längsschnitt durch einen Bereich einer Hochdruck-Turbine mit einer Leitschaufel und dem Turbinenlaufrad nach Fig. 1 und Fig. 2,
- Fig. 4: eine vereinfachte Schnittdarstellung durch die Schaufelfüße von drei nebeneinander angeordneten Turbinenschaufeln entlang der Linie A-A in Fig. 3, und
- Fig. 5: eine perspektivische Prinzipskizze einer Kühlluftströmung durch einen Schaufelfuß der Turbinenschaufel der Fig. 4.

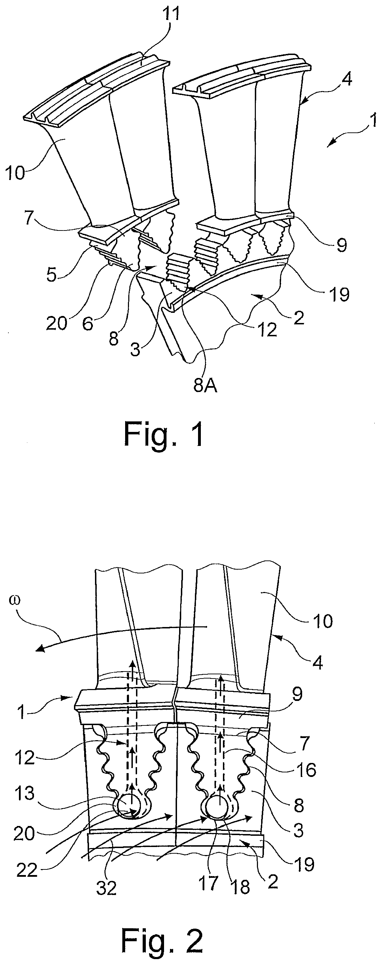

Bezug nehmend auf Fig. 1 bis Fig. 3 sind jeweils unterschiedliche Ausschnitte eines Hochdruck-Turbinenlaufrads 1 für ein Flugtriebwerk ersichtlich, wobei das Turbinenlaufrad 1 eine Rotorscheibe 2 aufweist, an deren durch einen Scheibenkranz gebildeter Umfangsfläche profilierte Scheibenfinger 3 ausgebildet sind.

In dem zwischen den Scheibenfingern 3 verbleibenden, eine Scheibenfingernut 8 bildenden Raum ist jeweils eine Turbinenschaufel 4 mit einem Schaufelfuß 6, welcher entsprechend den profilierten Scheibenfingern 3 ein tannenbaumförmiges Profil 5 aufweist, gehalten. Radial nach außen schließen sich an den Schaufelfuß 6 der Turbinenschaufel 4 ein Schaufelhals 7, eine Schaufelplattform 9, ein eine Druck- und Saugseite aufweisendes Schaufelprofil 10 und schließlich ein Schaufeldeckband 11 an. Gegen eine axiale Verschiebung sind die Turbinenschaufeln 4 durch eine geeignet gestaltete und an der Rotorscheibe 2 befestigte Schließplatte 28 gesichert.

Im Innern der Turbinenschaufel 4 befinden sich mehrere mit Kühlluft beaufschlagte Kühlkanale 16 einer Kühleinrichtung 12, welche von einem Boden 6A des Schaufelfußes 6 ausgehen und sich in radialer Richtung nach außen und ggf. zusätzlich in Querrichtung bis zu Austrittsöffnungen 14 an der Oberfläche von wärmebelasteten Bereichen der Turbinenschaufel 4 führen.

Mit Kühlluft gespeist werden die Kühlkanäle 16 über einen Kühlluftzuführkanal 13 der Kühleinrichtung 12, welcher sich axial über den größten Bereich der axialen Länge des Schaufelfußes 6 erstreckt und an seiner radial äußeren Seite durch den Boden 6A des Schaufelfußes sowie an seiner radial inneren Seite durch die Scheibenfingernut 8 gebildet wird.

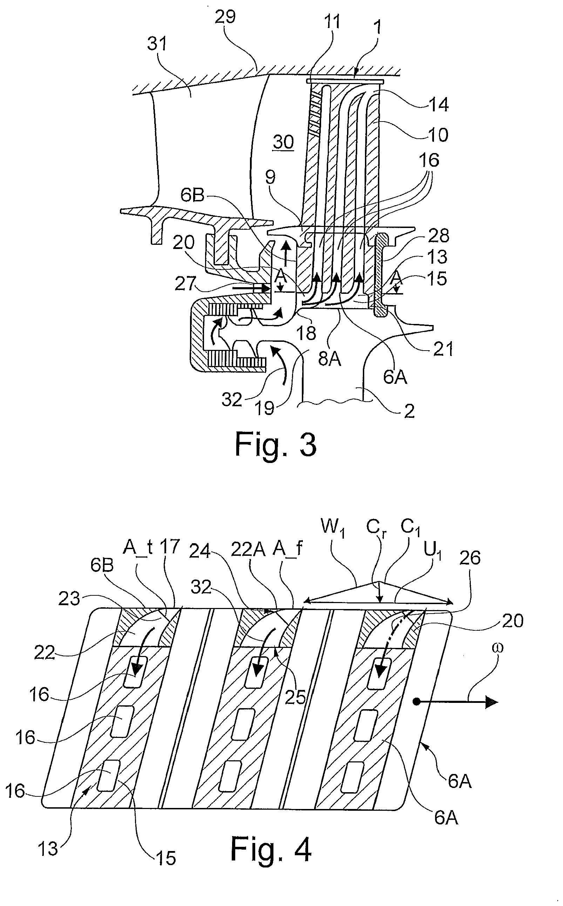

Wie insbesondere in Fig. 3 ersichtlich ist, ist das Turbinenlaufrad 1 bei der gezeigten Ausführung eine sogenannte Stufe-II-Laufscheibe einer zweiten Stufe einer Hochdruck-Axialturbine eines Flugtriebwerkes, welche in einem von einem Gehäuse 29 der Axialturbine begrenzten Ringkanal 30 in Strömungsrichtung betrachtet nach Leitschaufeln 31, welche am Gehäuse 29 der Axialturbine befestigt sind, angeordnet ist.

Abgesehen von der hier gezeigten Ausführung kann das Turbinenlaufrad 1 mit der Kühleinrichtung 12 prinzipiell ein Bestandteil einer Hochdruckturbine wie auch einer Niederdruckturbine sein. Die an dem Turbinenlaufrad 1 gezeigte Gestaltung der Kühleinrichtung 12 ist auch unabhängig von einer bestimmten Stufenposition einsetzbar.

Bei dem vorliegenden Ausführungsbeispiel wird in dem Ringkanal 30 ein durch die Pfeile 32 angedeuteter Kühlluftstrom, welcher zunächst eine Ringdichtung bzw. Abdichtleiste 19 am Scheibenkranz der Rotorscheibe 2 durchtritt, an die den Leitschaufeln 31 zugewandte Stirnfläche bzw. Anströmseite 6B des Schaufelfußes 6 der Turbinenschaufeln 4 gefördert und in den Kühlluftzuführkanal 13 eingeleitet, von dem aus er über die radial nach außen hin abzweigenden Kühlkanäle 16 zu den Effusionslöchern bzw. Austrittsöffnungen 14 verzweigt.

Wie an der jeweiligen Richtung der Pfeile 32 des Kühlluftstroms zu erkennen ist, weist der Kühlluftstrom zum Kühlluftzuführkanal 13 hin einen negativen Drall bezogen auf die mit Pfeil ω gezeigte Drehrichtung des Turbinenlaufrades 4 auf. Die negative Drallströmung hat vor Eintritt in die Turbinenschaufeln 4 vorliegend eine Drallzahl von annähernd 0,5 im Absolutsystem, womit bei einem stetigen axialen Verlauf des Kühlluftzuführkanals 13 über die gesamte Länge des Fußes der Turbinenschaufel 4 aufgrund der Strömungsrichtung entgegengesetzt zur Rotationsrichtung ω der Rotationsscheibe 2 und der drallbedingten Querströmung beträchtliche Kühlluftdruckverluste am Eintritt in den Kühlluftzuführkanal 13 und mithin im gesamten Laufschaufelkühlsystem auftreten würden.

Die Vermeidung derartiger Verluste kann ergänzend oder alternativ über die Platzierung einer Vorleitdüse 27 beeinflusst werden.

Zur Bildung des Mikrokompressors weist der Kühlluftdurchlass 22, welcher eine Art horizontal gekrümmter Kanal darstellt, eine sich in Strömungsrichtung wie ein Diffusor erweiternde Kanalgeometrie auf. Die Krümmung des Kühlluftdurchlasses 22 in dem Pfropfen 20 ist vorliegend derart gewählt, dass eine Mittelachse 26 des Kühlluftdurchlasses 22 im Bereich eines Eintritts 24 des einen Drall aufweisenden Kühlluftstromes 32 in den Kühlluftzuführkanal 13 und den Kühlluftdurchlass 22 des hierin angeordneten Pfropfens 20 wenigstens annähernd gleichgerichtet zu der relativen Kühlluftanströmrichtung ist, welche in Umfangsrichtung der Rotorscheibe 2 entgegengesetzt zu deren Rotationsrichtung ω verläuft. Damit ist die Eintrittsöffnung des Kühlluftstroms flach gestaltet, d. h. mit einem spitzen Winkel zur Anströmseite 6A des Schaufelfußes 6.

Um Strömungsverluste und einen Strömungsabriss weiter zu vermeiden ist die Scheibenfingernut 8 an ihrem der Anströmseite 6B zugewandten Ende mit einer Rundung, d. h. einem Radius 17, an der vorderen Kante 18 ausgebildet.

Am Ende seiner Krümmung befindet sich der Austritt 25 des Kühlluftstromes aus dem Kühlluftdurchlass 22 in den axial sowie mit stetigem und größeren Querschnitt verlaufenden anschließenden Bereich 15 des Kühlluftzuführkanals 13, wobei die Mittelachse 26 des Kühlluftdurchlasses 22 im Bereich des Austritts 25 des Kühlluftstromes im Wesentlichen koaxial oder achsparallel zu einer Mittelachse des sich in Axialrichtung der Turbinenschaufel 4 erstreckenden anschließenden Bereichs 15 des Kühlluftzuführkanals 13 verläuft. Von diesem axial anschließenden Bereich 15 des Kühlluftzuführkanals 13, welcher an seinem dem Pfropfen 20 abgewandten Ende durch einen den Kanalquerschnitt schließenden so genannten Haken 21 axial begrenzt ist, verzweigen die Kühlkanale 16 ins Innere der Turbinenschaufel 4.

Wie insbesondere in den Fig. 2, 4 und 5 ersichtlich, ist der Kühlluftdurchlass 22 des Pfropfens 20 den darin geführten Kühlluftstrom umlenkend sowie verlangsamend und damit druckerhöhend ausgebildet. Hinsichtlich der Dimensionierung der Diffusorgeometrie des Kühlluftdurchlasses 22 entspricht bei der gezeigten Ausführung eine Querschnittsfläche A_f einer Öffnung 22A des Kühlluftdurchlasses 22 in der Wandung der Anströmseite 6B des Schaufelfußes 6 wenigstens annähernd dem Zweifachen einer Querschnittsfläche A_t eines Halsbereiches 23 und mithin der kleinsten Querschnittsfläche des Kühlluftdurchlasses 22 im Bereich des Eintritts 24 des Kühlluftstromes 32 in den Pfropfen 20.

In Versuchen hat es sich als vorteilhaft erwiesen, wenn bei einer maximalen Breite des Pfropfens 20 von 8 mm und einer an den Schaufelfußboden 6A grenzenden minimalen Breite von 5 mm der Kühlluftdurchlass 22 so gestaltet ist, dass die Querschnittsfläche A_f der Öffnung 22A in der Schaufelfußanströmseite 6B eine Größe von etwa 15 mm² bei einer Breit von 4 mm aufweist, während die Größe der Querschnittsfläche A_t des Halsbereiches 23 etwa 8 mm² beträgt.

Aufgrund des flachen Kühllufteintritts und der entsprechenden Krümmung des Kühlluftdurchlasses 22 bereits im Bereich des Eintritts 24 des Kühlluftstromes 32 weisen die Querschnittsflächen der Öffnung 22A in der Schaufelfußanströmseite 6B und im Halsbereich 23 des Kühlluftdurchlasses 22 einen Winkel in der Horizontalen zueinander auf.

Die Kante 18 und der Kühlluftdurchlass 22 des Pfropfens 20 sind dreidimensional aerodynamisch sorgfältig entsprechend den Auslegungsregeln für Hochleistungsturbomaschinen gestaltet und bilden zusammen einen effizienten MikroKompressor mit Druck- und Saugseite, welcher zusammen mit dem im weiteren Verlauf axialen Kühlluftzuführkanal 13 und den radial in das Schaufelprofil 10 abzweigenden Kühlkanälen 16 ein effektives Mikro-Zentrifugalkompressor-System zur Kühlung der Turbinenschaufel 4 bildet.

Der Kühlluftstrom 32, welcher nach Durchströmung der Abdichtleiste 19 am Scheibenkranz bei der Einströmung an der Kante 18 radial nach außen und in Umfangsrichtung in Drehrichtung ω eine Relativgeschwindigkeit w von beispielsweise 200 m/s aufweisen kann, erfährt in dem entsprechend aerodynamisch ausgelegten Mikrokompressor 20 eine Druckerhöhung, was in einem signifikanten Kühlstromstaudruckgewinn bei Austritt aus dem Pfropfen bzw. Mikrokompressor resultiert. Dieser Stauüberdruck bewirkt wiederum eine effiziente Kühlung der Turbinenschaufel 4.

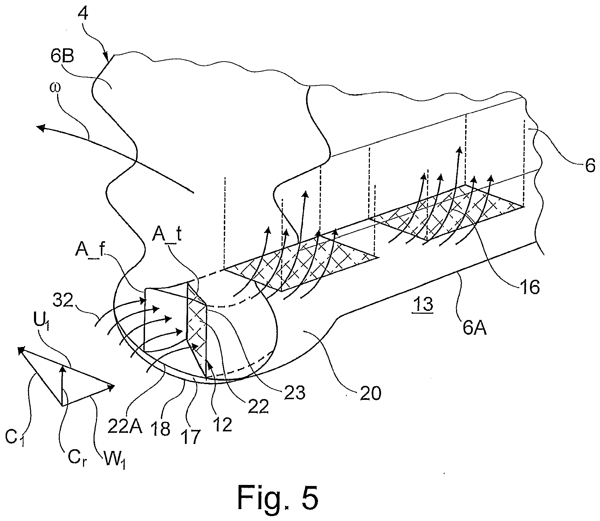

In der Schnittansicht der Fig. 4, in der die Kühlkanäle 16 senkrecht zur Schnittebene und Ebene des Bodens 6A des Schaufelfußes 6 gerichtet sind, sowie in der axonometrischer Darstellung des Schaufelfußbereiches in Fig. 5 ist der Kühlluftstrom 32 vektoriell mit einem Geschwindigkeitsdreieck veranschaulicht. Darin ist mit u₁ eine Umfangsgeschwindigkeit jeden Punktes des Turbinenlaufrades 1, mit w₁ die Relativgeschwindigkeit der Strömung, mit c₁ eine Absolutgeschwindigkeit der Strömung und mit cᵣ deren Radialkomponente dargestellt. Letztere beträgt beispielsweise bei der hier angenommenen Relativgeschwindigkeit w₁ von 200 m/s etwa 87 m/s.

Bei dem gezeigten Ausführungsbeispiel ist der Pfropfen 20 mit dem Kühlluftdurchlass 22 als ein sich in Richtung des Inneren des Turbinenlaufrads 1 und in den Kühlluftzuführkanal 12 erstreckender, zahnartiger Fortsatz des Schaufelfußes 6 ausgebildet. Zur Realisierung der gezeigten einstückigen Ausführung wird der Pfropfen bzw. Mikrokompressor 20 beim Gießen der Turbinenschaufel 4 zweckmä-ßigerweise mitgegossen. Der mitgegossene und/oder eingefräste Kühlluftdurchlass 22 ist in einem einem Boden 8A der Scheibenfingernut 8 zugewandten Bereich mit einem offenen Querschnitt ausgebildet und nutzt somit an einer Seite die Wandung der Scheibenfingernut 8 zur Bildung des Kühlluftdurchlasses 22.

Durch die Anordnung des Fortsatz 20 mit dem Kühlluftdurchlass 22 an der Unterseite des Schaufelfußes 6 bzw. im untersten Zapfen des Tannenbaumprofils 5 des Schaufelfußes 6 und die Führung der Kühlluft in dem Kühlluftdurchlass 22 und dem Kühlluftzuführkanal 13 im Bereich des Bodens 8A der Scheibenfingernut 8 ist zudem ein optimaler Strömungsverlauf gewährleistet.

### Bezugszeichenliste

- 1: Turbinenlaufrad
- 2: Rotorscheibe
- 3: Scheibenfinger
- 4: Turbinenschaufel
- 5: tannenförmiges Profil
- 6: Schaufelfuß
- 6A: Boden Schaufelfuß
- 6B: Anströmseite Schaufelfuß
- 7: Schaufelhals
- 8: Scheibenfingernut
- 8A: Boden Scheibenfingernut
- 9: Schaufelplattform
- 10: Schaufelprofil
- 11: Schaufeldeckelband
- 12: Kühleinrichtung
- 13: Kühlluftzuführkanal
- 14: Austrittsöffnung
- 15: Bereich Kühlluftzuführkanal
- 16: Kühlkanal
- 17: Radius, Rundung
- 18: Kante
- 19: Abdichtleiste
- 20: Pfropfen, Plug, Fortsatz
- 21: Haken
- 22: Kühlluftdurchlass
- 22A: Öffnung Kühlluftdurchlass
- 23: Halsbereich
- 24: Eintritt
- 25: Austritt
- 26: Mittelachse
- 27: Vorleitdüse
- 28: Schließplatte
- 29: Gehäuse
- 30: Ringkanal
- 31: Leitschaufel
- 32: Kühlluftstrom
- A_f: Querschnittsfläche Kühlluftdurchlass anströmseitig
- A_t: Querschnittsfläche Halsquerschnitt des Kühlluftdurchlasses
- c₁: Absolutgeschwindigkeit
- cᵣ: Radialkomponente
- u₁: Umfangsgeschwindigkeit
- w₁: Relativgeschwindigkeit
- ω: Rotationsgeschwindigkeit

## Patentansprüche

1. Gekühltes Turbinenlaufrad, insbesondere Hochdruckturbinenlaufrad für ein Flugtriebwerk, mit an einer Umfangsfläche einer Rotorscheibe (2) radial angeordneten Turbinenschaufeln (4), wobei jeweils eine Turbinenschaufel (4) mit einem profilierten Schaufelfuß (6) in eine korrespondierend profilierte Scheibenfingernut (8) an der Umfangsfläche der Rotorscheibe (2) eingesetzt ist, und wobei eine Kühleinrichtung (12) vorgesehen ist mit mindestens einem sich zumindest im Wesentlichen axial und wenigstens über einen Teil der axialen Länge des Schaufelfußes (6) erstreckenden Kühlluftzuführkanal (13) und mindestens einem hiervon abzweigenden, sich im Inneren der Turbinenschaufel (4) bis zu einer Austrittsöffnung (14) an deren Oberfläche erstreckenden Kühlkanal (16),
**dadurch gekennzeichnet, dass** an einer Anströmseite (6B) des Schaufelfußes (6) in dem Kühlluftzuführkanal (13) ein Pfropfen (Plug 20) mit einem Kühlluftdurchlass (22) angeordnet ist, wobei der Kühlluftdurchlass (22) eine einen Mikrokompressor bildende derart Geometrie aufweist, dass der Kühlluftdurchlass (22) eine sich in Strömungsrichtung diffusorartig erweiternde Kanalquerschnittsfläche und in Strömungsrichtung horizontal eine Krümmung aufweist, und wobei der Pfropfen (20) mit dem Schaufelfuß (6) einstückig ausgebildet ist.

2. Turbinenlaufrad nach Anspruch 1, **dadurch gekennzeichnet, dass** eine Mittelachse (26) des Kühlluftdurchlasses (22) im Bereich des Eintritts (24) eines einen Drall aufweisenden Kühlluftstromes (32) wenigstens annähernd gleichgerichtet zu der Kühlluftanströmrichtung, welche im Relativsystem in Umfangsrichtung der Rotorscheibe im Wesentlichen entgegengesetzt zur Rotationsrichtung (ω) der Rotationsscheibe (2) ist, verläuft und nach der Krümmung im Bereich des Austritts (25) des Kühlluftstromes im Wesentlichen in Axialerstreckung des Kühlluftzuführkanals (12) ausgerichtet ist.

3. Turbinenlaufrad nach einem der Ansprüche 1 oder 2, **dadurch gekennzeichnet, dass** eine Querschnittsfläche (A_f) der Öffnung (22A) des Kühlluftdurchlasses (22) an der Anströmseite (6B) des Schaufelfußes (6) wenigstens annähernd dem Zweifachen einer Querschnittsfläche (A_t) eines Halsbereichs (23) des Kühlluftdurchlasses (22) im Bereich des Eintritts (24) eines Kühlluftstromes (30) entspricht.

4. Turbinenlaufrad nach einem der Ansprüche 1 bis 3, **dadurch gekennzeichnet, dass** der Pfropfen (20) mit dem Kühlluftdurchlass (22) als ein sich radial in Richtung des Inneren des Turbinenlaufrads (1) und in den Kühlluftzuführkanal (12) erstreckender, axial vor der Abzweigung eines Kühlkanals (16) der Turbinenschaufel (4) angeordneter Fortsatz (20) des Schaufelfußes (6) ausgebildet ist.

5. Turbinenlaufrad nach Anspruch 4, **dadurch gekennzeichnet, dass** der Schaufelfuß (6) ein tannenbaumartig geformtes Profil (5) aufweist, an dessen dem radial Inneren des Turbinenlaufrads (1) zugewandter Unterseite der Fortsatz (20) zahnartig und einstückig ausgebildet ist.

6. Turbinenlaufrad nach einem der Ansprüche 1 bis 5, **dadurch gekennzeichnet, dass** der Kühlluftdurchlass (22) in einem einem Boden (8A) der Scheibenfingernut (8) zugewandten Bereich mit einem offenen Querschnitt ausgebildet ist und zusammen mit der Scheibenfingernut (8) den Strömungsquerschnitt für den Kühlluftstrom (32) bildet.

7. Turbinenlaufrad nach einem der Ansprüche 1 bis 6, **dadurch gekennzeichnet, dass** die Scheibenfingernut (8) an ihrem der Anströmseite (6B) zugewandten Ende eine mit einem Radius (17) oder einer Fase ausgebildete Kante (18) aufweist.

## Claims

1. Cooled turbine wheel, in particular high-pressure turbine wheel for an aircraft engine, having turbine blades (4) arranged radially on a circumferential surface of a rotor disc (2), wherein in each case one turbine blade (4) having a profiled blade root (6) is inserted into a correspondingly profiled disc finger groove (8) on the circumferential surface of the rotor disc (2), and wherein a cooling device (12) is provided with at least one cooling air supply channel (13) extending at least substantially axially and over at least part of the axial length of the blade root (6), and with at least one cooling channel (16) which branches off from said cooling air supply channel and extends in the interior of the turbine blade (4) as far as to an outlet opening (14) on the surface thereof, **characterized in that** a plug (plug 20) having a cooling air passage (22) is arranged in the cooling air supply channel (13) on an inflow side (6B) of the blade root (6), wherein the cooling air passage (22) has a geometry forming a microcompressor in such a manner that the cooling air passage (22) has a channel cross-sectional area expanding in the manner of a diffuser in the flow direction, and a curvature horizontally in the flow direction, and wherein the plug (20) is formed integrally with the blade root (6).

2. Turbine wheel according to Claim 1, **characterized in that** a centre axis (26) of the cooling air passage (22) in the region of the inlet (24) of a swirled cooling air flow (32) runs at least approximately in the same direction as the cooling air inflow direction which, in the relative system in the circumferential direction of the rotor disc, is substantially opposed to the direction of rotation (ω) of the rotor disc (2), and, after the curvature in the region of the outlet (25) of the cooling air flow, is oriented substantially in the axial extent of the cooling air supply channel (12).

3. Turbine wheel according to either of Claims 1 and 2, **characterized in that** a cross-sectional area (A_f) of the opening (22A) of the cooling air passage (22) on the inflow side (6B) of the blade root (6) at least approximately corresponds to twice a cross-sectional area (A_t) of a neck region (23) of the cooling air passage (22) in the region of the inlet (24) of a cooling air flow (30).

4. Turbine wheel according to one of Claims 1 to 3, **characterized in that** the plug (20) having the cooling air passage (22) is designed as a continuation (20) of the blade root (6) that extends radially in the direction of the interior of the turbine wheel (1) and into the cooling air supply channel (12) and is arranged axially upstream of the branching-off of a cooling channel (16) of the turbine blade (4).

5. Turbine wheel according to Claim 4, **characterized in that** the blade root (6) has a profile (5) which is shaped in the manner of a fir tree and on the lower side of which, which side radially faces the interior of the turbine wheel (1), the continuation (20) is formed in the manner of a tooth and integrally.

6. Turbine wheel according to one of Claims 1 to 5, **characterized in that** the cooling air passage (22) is formed with an open cross section in a region facing a base (8A) of the disc finger groove (8) and, together with the disc finger groove (8), forms the flow cross section for the cooling air flow (32).

7. Turbine wheel according to one of Claims 1 to 6, **characterized in that** the end of the disc finger groove (8) that faces the inflow side (6B) has an edge (18) formed with a radius (17) or a chamfer.

## Revendications

1. Roue de turbine refroidie, en particulier roue de turbine à haute pression destinée à un moteur d'avion, comprenant des aubes de turbine (4) disposées radialement sur une surface périphérique d'un disque de rotor (2), une aube de turbine (4) pourvue d'un pied d'aube profilé (6) étant insérée dans une rainure de doigt de disque profilée correspondante (8) sur la surface circonférentielle du disque de rotor (2), et un dispositif de refroidissement (12) étant prévu qui comporte au moins un conduit d'alimentation en air de refroidissement (13), qui s'étend au moins sensiblement axialement et au moins sur une partie de la longueur axiale du pied d'aube (6), et au moins un conduit de refroidissement (16) qui bifurque dudit conduit d'alimentation en air de refroidissement et qui s'étend à l'intérieur de l'aube de turbine (4) jusqu'à une ouverture de sortie (14) au niveau de sa surface,
**caractérisé en ce qu'**un bouchon (plug 20) pourvu d'un passage d'air de refroidissement (22) est disposé sur un côté d'entrée (6B) du pied d'aube (6) dans le conduit d'alimentation en air de refroidissement (13), le passage d'air de refroidissement (22) ayant une géométrie qui forme un micro-compresseur de telle sorte que le passage d'air de refroidissement (22) a une section transversale de conduit qui s'élargit à la manière d'un diffuseur dans le sens d'écoulement et, horizontalement dans le sens d'écoulement, une courbure et le bouchon (20) étant formé d'une seule pièce avec le pied d'aube (6).

2. Roue de turbine selon la revendication 1, **caractérisé en ce qu'**un axe central (26) du passage d'air de refroidissement (22) s'étend, au niveau de l'entrée (24) d'un flux d'air de refroidissement (32) comportant un tourbillon, au moins approximativement dans le même sens que le sens d'entrée d'air de refroidissement qui, dans le système relatif, est sensiblement opposé au sens de rotation (ω) du disque de rotor (2) dans la direction circonférentielle du disque de rotor et qui, après la courbure, au niveau de la sortie (25) du flux d'air de refroidissement, est orienté sensiblement suivant l'extension axiale du conduit d'alimentation en air de refroidissement (12).

3. Roue de turbine selon l'une des revendications 1 ou 2, **caractérisée en ce qu'**une surface en coupe transversale (A_f) de l'ouverture (22A) du passage d'air de refroidissement (22) du côté entrée (6B) du pied d'aube (6) correspond au moins approximativement à deux fois la surface en coupe transversale (A_t) d'une région de col (23) du passage d'air de refroidissement (22) au niveau de l'entrée (24) d'un flux d'air de refroidissement (30).

4. Roue de turbine selon l'une des revendications 1 à 3, **caractérisée en ce que** le bouchon (20), pourvu du passage d'air de refroidissement (22), est conçu comme un prolongement (20) du pied d'aube (6) qui s'étend radialement en direction de l'intérieur de la roue de turbine (1) et jusque dans le conduit d'alimentation en air de refroidissement (12) et qui est disposé axialement en amont de la bifurcation d'un conduit de refroidissement (16) de l'aube de turbine (4).

5. Roue de turbine selon la revendication 4, **caractérisée en ce que** le pied d'aube (6) comporte un profilé (5) en forme de sapin du côté inférieur duquel le prolongement (20) est conçu en forme de dent et d'une seule pièce, lequel côté inférieur est tourné radialement vers l'intérieur de la roue de turbine (1).

6. Roue de turbine selon l'une des revendications 1 à 5, **caractérisée en ce que** le passage d'air de refroidissement (22) est ménagé dans une zone qui est tournée vers un fond (8A) de la rainure de doigt de disque (8), et qui est pourvue d'une section transversale ouverte et qui forme conjointement avec la rainure de doigt de disque (8) la section transversale d'écoulement destinée au flux d'air de refroidissement (32).

7. Roue de turbine selon l'une des revendications 1 à 6, **caractérisée en ce que** la rainure de doigt de disque (8) comporte, à son extrémité tournée vers le côté entrée (6B), un bord (18) formé avec un rayon (17) ou un biseau.
